# EUROPÄISCHE PATENTSCHRIFT

(11) **EP 1 697 018 B1**
(45) Veröffentlichungstag und Bekanntmachung des Hinweises auf die Patenterteilung: **20.02.2008**
(21) Anmeldenummer: 04790790.2
(22) Anmeldetag: 23.10.2004
(51) Int. Cl.: B01D 33/073, B01D 33/46, B29C 47/68

(54) **VORRICHTUNG ZUM KONTINUIERLICHEN FILTERN VON MATERIALGEMISCHEN**
DEVICE FOR CONTINUOUSLY FILTERING MATERIAL MIXTURES
DISPOSITIF DE FILTRAGE CONTINU DE MELANGES DE MATERIAUX

(30) Priorität: 20.12.2003 DE 20319752 U
(43) Veröffentlichungstag der Anmeldung: 06.09.2006
(73) Patentinhaber: Ettlinger Kunststoffmaschinen GmbH, 86343 Königsbrunn (DE)
(72) Erfinder: ETTLINGER, Roderich, 86179 Augsburg (DE)
(74) Vertreter: Schwarz, Thomas
(86) Internationale Anmeldenummer: PCT/EP2004/011999
(87) Internationale Veröffentlichungsnummer: WO 2005/063357

(56) Entgegenhaltungen:
- EP-A- 0 615 829
- WO-A-93/15819
- WO-A-97/26973

## Beschreibung

Die Erfindung betrifft eine Vorrichtung zum kontinuierlichen Filtern von Materialgemischen, insbesondere zur Abtrennung von Verunreinigungen aus Kunststoffschmelzen, nach dem Oberbegriff des Anspruchs 1.

Gebrauchte Kunststoffe oder Kunststoffabfälle weisen üblicherweise hohe Anteile an Fremdstoffen, wie z.B. Metallteile, Papierreste, Glas, Sekundärkunststoffe und dgl. auf. Diese Fremdstoffe oder Verunreinigungen müssen vor der Wiederverwertung der Kunststoffe in der Regel entfernt werden. Dies erfolgt vielfach dadurch, dass die gebrauchten Kunststoffe durch Erwärmung zunächst plastifiziert werden und die Kunststoffschmelze anschließend filtriert wird. Hierfür werden so genannte Schmelzefilter eingesetzt, durch welche die metallischen oder nichtmetallischen Fremdstoffe oder höherschmelzende Kunststoffe abgetrennt werden. Um eine kontinuierliche und störungsfreie Filtrierung zu ermöglichen, müssen die Schmelzefilter jedoch ständig gereinigt werden.

Aus der US 4 470 904 ist eine Trennvorrichtung bekannt, bei der die verschmutzte Kunststoffschmelze in den Innenraum eines in einem Gehäuse angeordneten hohlzylindrischen Filterkörpers gepresst wird. In dem Innenraum des Filterkörpers ist eine zu diesem koaxiale drehangetriebene Schaberwelle angeordnet, die mit der Innenwand des Filterkörpers einen inneren Ringraum begrenzt und an ihrer Außenseite mehrere, schräg zur Achsrichtung verlaufende und sich zu einer Schneckenwendel ergänzende Schaber trägt. Die von dem Filterkörper an seiner Innenseite zurückgehaltenen Rückstände werden von den Schabern durch die Rotation der Schaberwelle zu einem dem Einlassende des inneren Ringraums axial gegenüberliegenden Materialauslass längs des Filterkörpers transportiert. Die Schaber werden von ihrer Innenseite federnd an die Innenfläche des Filterkörpers angedrückt. Bei einer derartigen federnden Anstellung der Schaber besteht jedoch das Problem, dass die Schaber infolge des Druckes der Kunststoffschmelze von der Oberfläche des Filterkörpers abgehoben werden können und dadurch ihre Wirkung verlieren. Ein zu hoher Anstelldruck führt andrerseits zu einer erhöhten Reibung zwischen dem Filterkörper und den Schabern, was mit einem schnelleren Verschleiß verbunden ist.

In der WO 97/26973 ist eine gattungsgemäße Vorrichtung zur Filterung plastifizierten thermoplastischen Kunststoffgutes mit einem innerhalb eines Gehäuses angeordneten hohlzylindrischen Filterelement, einem von der Außenseite des Filterelements und einer Innenwand des Gehäuses begrenzten Ringraum und mehreren an der Außenseite des Filterelements anliegenden Schabern zur Entfernung der am Filterelement zurückgehaltenen Verunreinigungen offenbart. Die Schaber enthalten eine an dem Filterelement anliegende Schabkante und werden über Federn an das Filterelement angedrückt. Es ist außerdem angegeben, dass auch der Druck des zugeführten Kunststoffgutes zusätzlich oder ausschließlich zur Erzeugung des Anpressdrucks der Schaber genutzt werden kann.

Aufgabe der Erfindung ist es, eine Vorrichtung der eingangs genannten Art zu schaffen, die eine verbesserte Beseitigung der an dem Filterelement zurückgehaltenen Rückstände ermöglicht.

Diese Aufgabe wird durch eine Vorrichtung mit den Merkmalen des Anspruchs 1 gelöst. Zweckmäßige Weiterbildungen und vorteilhafte Ausführungsformen der Erfindung sind in den Unteransprüchen angegeben.

Ein wesentlicher Vorteil der erfindungsgemäßen Vorrichtung besteht darin, dass der Anpressdruck des Abstreifers automatisch ohne Eingriffe von außen an die tatsächlichen Verhältnisse angepasst werden kann. Wenn z.B. der Druck des zugeführten Materials steigt und sich damit die Gefahr eines Abhebens des Abstreifers erhöht, wird gemäß der Erfindung auch der Anpressdruck des Abstreifers automatisch ohne Eingriff von außen erhöht. Wenn der Druck des zugeführten Materials dagegen fällt, wird auch der Anpressdruck des Abstreifer entsprechend reduziert und dadurch die Reibung zwischen dem Abstreifer und dem Filterelement verringert.

In einer zweckmäßigen Ausführungsform der Erfindung ist der Druckaufnehmer ein hydraulischer Druckgeber, der den Druck des zugeführten Materials stromaufwärts des Filterelements erfaßt und in ein hydraulisches Steuersignal umwandelt. Das Stellglied besteht aus einem mit dem hydraulischen Druckgeber über eine Hydraulikleitung verbundenen Stellzylinder, durch den der Steuerdruck in einen Anpressdruck für den Abstreifer umgewandelt wird.

Der Druckaufnehmer kann aber auch ein elektrischer Druckgeber sein, der entsprechende Steuersignale für ein Druckregelventil oder ein elektrisches Stellglied liefert.

Bei der erfindungsgemäßen Vorrichtung werden die Filterrückstände in radialer Richtung von der Filteroberfläche abgehoben und damit auf schnellstem Weg von der Filteroberfläche entfernt. Die Rückstände werden nicht an der Filteroberfläche axial entlang geschoben, so dass der Verschleiß verringert und die Standfestigkeit der Vorrichtung verbessert werden kann. Durch die geringeren abrasiven Beanspruchungen des Filters können auch einfacher aufgebaute und kostengünstigere Filter verwendet werden.

Das durch den Abstreifer abgehobene Material wird zweckmäßigerweise durch eine Förderschnecke oder dgl. abtransportiert. Das Filterelement und die Förderschnecke können gesondert angetrieben werden, so dass eine getrennte Regelung von Reinigungs- und Fremdstoffaustragsgeschwindigkeit ermöglicht wird. Durch eine derartige Regelung kann eine sehr hohe Fremdstofflconzentration und somit eine hohe Ausbeute des Primärmaterials erzielt werden. Die Fördervorrichtung besteht in einer zweckmäßigen Ausführung aus einer motorisch drehangetriebenen Förderschnecke. Die Drehzahlen des Filters und der Förderschnecke sind getrennt steuerbar, wodurch eine sehr hohe Störstofflconzentration bei einer optimalen aktiven Filterfläche erreicht werden kann. Je nach Kunststoffart können das Filter und die Förderschnecke gleiche oder entgegengesetzte Drehrichtungen aufweisen.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: ein erstes Ausführungsbeispiel einer Trennvorrichtung in einem Längsschnitt;
- **Figur 2**: einen Querschnitt der Trennvorrichtung von Figur 1;
- **Figur 3**: einen Querschnitt eines zweiten Ausführungsbeispiels einer Trennvorrichtung;
- **Figur 4**: eine erste Ausführungsform einer Anstelleinrichtung zum Anpressen eines Abstreifers an das Filterrohr und
- **Figur 5**: eine zweite Ausführungsform einer Anstelleinrichtung.

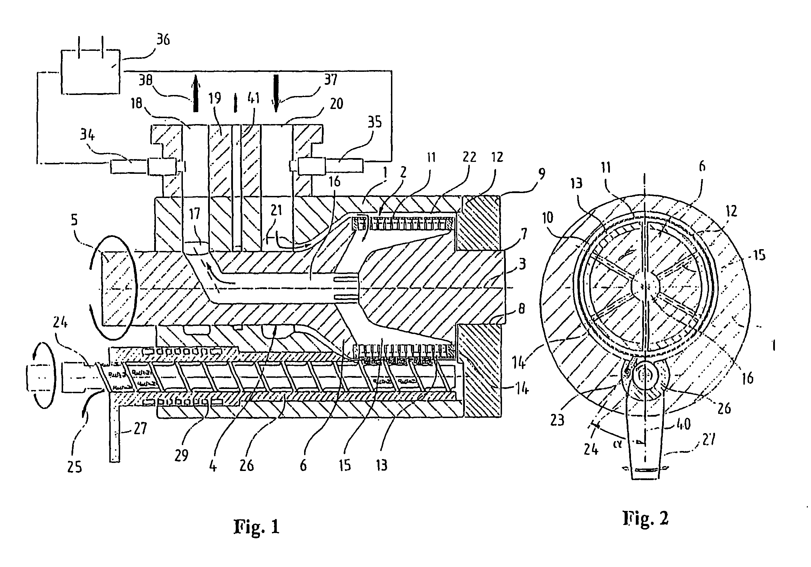

Die in Figur 1 schematisch dargestellte Filtervorrichtung zum Filtern verunreinigter Kunststoffschmelzen enthält ein Gehäuse 1, in dem ein hohlzylindrisches Filterelement 2 um eine Mittelachse 3 drehbar angeordnet ist. Das Filterelement 2 ist auf einer motorisch angetriebenen Trägerwelle 4 montiert. Diese enthält einen im Gehäuse 1 gelagerten schlankeren Antriebsteil 5, einen verbreiterten Aufnahmeteil 6 für den Schmelzefilter 2 und einen schlankeren Lagerzapfen 7, der in einer entsprechenden Bohrung 8 eines am Gehäuse 1 befestigten Lagerdeckels 9 drehbar gelagert ist.

Das Filterelement 2 besteht aus einem mit einer Vielzahl radialer Durchgangsöffnungen 10 versehenen Filterrohr 11 und einem mit der Trägerwelle 4 formschlüssig verbundenen, hohlzylindrischen Stützkörper 12, auf den das Filterrohr 11 aufgeschrumpft ist. Das siebförmige Filterrohr 11 kann z.B. aus einem mit den Durchgangsöffnungen 10 versehenen Stahlblech gefertigt sein, das zu einem Rohr gebogen und anschließend verschweißt wird. Es wird zweckmäßigerweise aus einem verschleißfesten und korrrosionbeständigen Stahl hergestellt und gehärtet. Das Filterrohr 11 kann auch mit Oberflächenbeschichtungen versehen werden, durch welche die Verschleißfestigkeit und sonstige Eigenschaften verbessert werden können. Die Durchgangsöffnungen 10 sind als Bohrungen mit einem sich in Strömungsrichtung erweiternden Querschnitt ausgeführt. Die Durchgangsöffnungen 10 können sich z.B. nach außen konisch verjüngen. Der hohlzylindrische Stützkörper 12 hat an seiner Außenseite mehrere als umlaufende Nut oder Flachgewinde ausgeführte Sammelkanäle 13, von denen mehrere in Umfangsrichtung gleichwinklig beabstandete radiale Abströmbohrungen 14 nach innen führen.

Wie aus den Figuren 1 und 2 hervorgeht, münden die radialen Abströmbohrungen 14 in axiale Sammelschlitze 15, die innerhalb der Trägerwelle 4 in gleichen Winkelabständen wie die Abströmbohrungen über den Umfang des erweiterten Aufnahmeteils 6 verteilt angeordnet sind und einen Innenraum zum Sammeln des gefilterten Materials bilden. Die sich in Strömungsrichtung erweiternden Sammelschlitze 15 führen zu einem zentralen Sammelkanal 16, der über einen schrägen Abschnitt in einen ersten Ringkanal 17 innerhalb des Gehäuses 1 mündet. Von dem ersten Ringkanal 17 führt eine erste seitliche Bohrung innerhalb des Gehäuses 1 zu einem Austrittskanal 18 eines Anschlussstutzens 19. In dem Anschlussstutzen 19 befindet sich auch ein Eintrittskanal 20, der über eine zweite seitliche Bohrung innerhalb des Gehäuses 1 zu einem zweiten Ringkanal 21 im Gehäuse 1 führt. Dieser Ringkanal 21 steht mit einem Ringraum 22 in Verbindung, der zwischen der Innenwand des Gehäuses 1 und der Außenwand des Filterrohres 11 begrenzt wird.

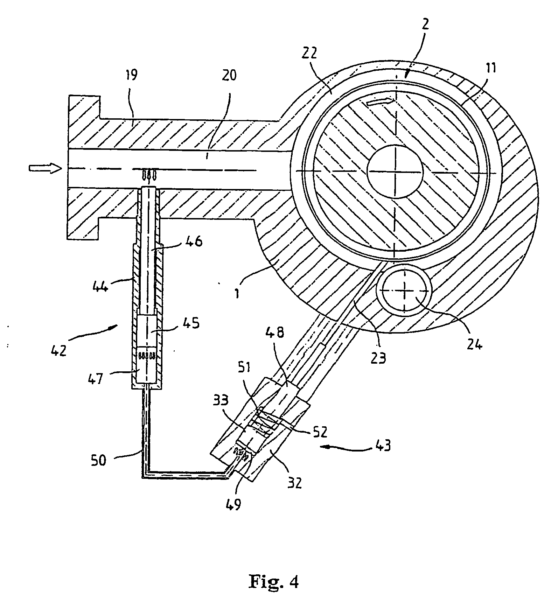

Wie aus Figur 2 hervorgeht, ist in dem unteren Teil des Gehäuses 1 ein in Axialrichtung über die gesamte Länge des Filterrohres 11 verlaufender und an dessen Außenseite anliegender Abstreifer 23 in Form einer Klinge, eines Messers oder dgl. derart angeordnet, dass die am Filterelement 2 zurückgehaltenen Rückstände oder Verunreinigungen in radialer Richtung auf k-ürzestem Weg ohne über das Filterelement zu schleifen abgeführt werden. Der Abstreifer 23 ist schräg zur Außenfläche des Filterelements 2 und zu dessen Drehrichtung hin geneigt angeordnet. Bei der dargestellten Ausführung ist der Abstreifer 23 z.B. unter einem Anstellwinkel α im Bereich von 45° zu einer Mittelebene 40 des Filterelements 2 angeordnet und wird durch eine im folgenden noch näher beschriebene und in Figur 4 schematisch dargestellte Anstelleinrichtung an die Außenwand des Filterrohrs 11 angedrückt. In unmittelbarer Nähe des Abstreifers 23 ist innerhalb des Gehäuses 1 eine zur Mittelachse 3 des Filterelements 2 parallele Förderschnecke 24 angeordnet, die an der Außenseite des Filterelements 2 entlang bis zu einer Austrittsöffnung führt. Die Förderschnecke 24 ist so angeordnet, dass die durch den Abstreifer 23 radial abgestreiften Rückstände unmittelbar an die Förderschnecke 24 übergeben und von dieser in Richtung des Pfeils 25 von Figur 1 nach außen abtransportiert werden. Bei der in Figur 2 gezeigten Ausführung ist der Abstreifer 23 an einer die Förderschnecke 24 umgebenden und innerhalb des Gehäuses 1 drehbar angeordneten Hohlwelle 26 befestigt, die über einen Verstellhebel 27 drehbar ist. Dadurch kann der Anstellwinkel α und die Anpresskraft des Abstreifers 23 verändert werden. In der Hohlwelle 26 sind im Bereich des Materialaustritts der Förderschnecke 24 Kühlkanäle 29 vorgesehen. Über diese kann eine Kühlung des durch die Förderschnecke 24 abtransportierten Materials erreicht werden, um eine thermische Sperre zu bilden.

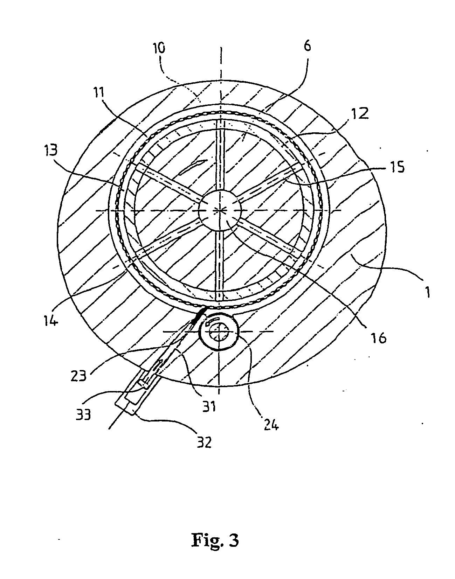

Der Abstreifer 23 kann auch in einer vorgegebenen Winkelstellung im Gehäuse 1 montiert sein, wie dies in Figur 3 gezeigt ist. Dort ist der Abstreifer 23 in einem schrägen Schlitz 31 im Gehäuse 1 verschiebbar geführt und wird durch ein Stellglied einer nachfolgend noch näher beschriebenen Anstelleinrichtung an die Außenseite des Filterrohres 11 angedrückt.

An dem Anschlussstutzen 19 sind im Bereich des Eintrittskanals 20 ein eingangsseitiger Massedruckaufnehmer 35 und im Bereich der Austrittskanals 18 ein ausgangsseitiger Massedruckaufnehmer 34 vorgesehen. Diese sind an eine Regelelektronik 36 zur Steuerung der Filtervorrichtung angeschlossen. Über die Regelelektronik 36 kann so z.B. die Drehbewegung des Filterkörpers 2 und der Förderschnecke 24 in Abhängigkeit von einem erfassten Differenzdruck gesteuert werden. Dadurch ist es möglich, das Filterelement 2 und die Förderschnecke 24 entsprechend zweier vorgegebener Druckwerte (max-min) intermittierend drehen zu lassen und so den Verschleiß zu reduzieren. Zwischen dem Eintrittskanal 20 und dem Austrittskanal 18 ist ein durch den Anschlussstutzen 19 und das Gehäuse 1 verlaufender Drainagekanal 41 angeordnet. Dadurch kann verhindert werden, dass Fremdstoffanteile über die Lagerstelle auf die Gutseite gelangen.

In Figur 4 ist ein erstes Ausführungsbeispiel einer Anstelleinrichtung zum Anpressen des in Form eines Messers oder einer Klinge ausgeführten Abstreifers 23 an die Außenseite des Filterrohrs 11 in Abhängigkeit vom Druck des zugeführten Materialgemisches gezeigt. Die Anstelleinrichtung besteht aus einem Druckaufnehmer 42 zur Erfassung des Drucks des Materialgemisches stromaufwärts des Filterelements 2 und einem mit dem Druckaufnehmer 42 verbundenen Stellglied 43 zur Einstellung des Anpressdrucks des Abstreifers 23 in Abhängigkeit von dem durch den Druckaufnehmer 42 erfassten Druck. Bei der in Figur 4 gezeigten hydraulischen Anstelleinrichtung ist der Druckaufnehmer 42 ein hydraulischer Druckgeber mit einem innerhalb eines Kolbengehäuses 44 verschiebbaren Druckkolben 45, der an seiner einen Stirnseite mit einem gegenüber dem Kolbengehäuse 44 vorstehenden Druckbolzen 46 verbunden ist. Durch die andere Stirnseite des Druckkolbens 45 und das Kolbengehäuse 44 wird eine mit Hydraulikfluid gefüllte Druckkammer 47 begrenzt. Der Druckaufnehmer 42 ist an dem Anschlussstutzen 19 derart angebracht, dass der Druckbolzen 46 in den Eintrittskanal 20 ragt.

Das Stellglied 43 besteht aus einem Stellzylinder, der einen innerhalb eines Zylindergehäuses 32 verschiebbaren Druckkolben 33 mit einer nach außen vorstehenden Kolbenstange 48 enthält. Das vordere Ende der Kolbenstange 48 ist mit dem Abstreifer 23 verbunden. Die hintere Stirnfläche des Druckkolbens 33 begrenzt mit dem Zylindergehäuse 32 einen Druckraum 49, der über eine Hydraulikleitung 50 mit der Druckkammer 47 des Druckaufnehmers 42 in Verbindung steht. Innerhalb des Zylindergehäuses 32 ist eine Druckfeder 51 zur Erzeugung einer auf den Druckkolben 33 wirkenden Rückstellkraft angeordnet. Der Stellzylinder kann auch als doppeltwirkender Differentialzylinder mit einem zusätzlichen Druckanschluss 52 zur Rückstellung ausgeführt sein.

Über den Druckbolzen 46 wird der Druck des durch den Eintrittskanal 20 zugeführten Materials auf den Druckkolben 45 übertragen, der in der Druckkammer 46 einen entsprechenden Steuerdruck erzeugt. Dieser Steuerdruck liegt über die Hydraulikleitung 50 auch in dem Druckraum 49 des Stellglieds 43 an und sorgt dafür, dass der Abstreifer 23 über den Druckkolben 33 und die Druckstange 48 an das Filterrohr 11 angepresst wird. Wenn der Druck in dem Eintrittskanal 20 steigt, wird auch der Abstreifer 23 stärker an das Filterrohr 11 angedrückt.

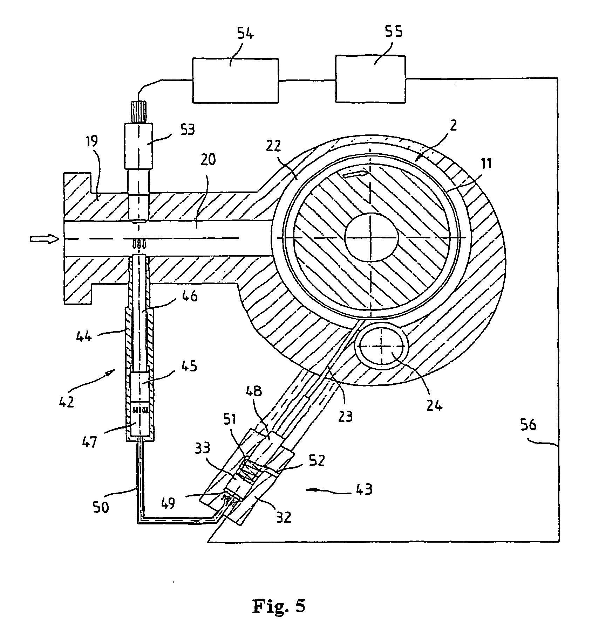

In Figur 5 ist eine weitere Möglichkeit einer Anstelleinrichtung gezeigt. Dort ist an dem Anschlussstutzen 19 ein elektrischer Druckgeber 53 vorgesehen, der den Druck der Kunststoffschmelze innerhalb des Eintrittskanals 20 erfasst und in dazu proportionale elektrische Signale umwandelt. Die von dem Druckgeber 53 gelieferten Signale werden in einer Steuerelektronik 54 in entsprechende Steuersignale für ein Druckregelventil 55 umgewandelt. Das Druckregelventil 55 ist über eine Druckleitung 56 mit dem Stellglied 43 verbunden. Durch das Druckregelventil 55 kann dann der Steuerdruck des hydraulischen Stellglieds 43 und damit der Anpressdruck des Abstreifers 23 in Abhängigkeit von dem durch den Druckgeber 53 erfassten Druck eingestellt werden.

Bei der vorstehend beschriebenen Vorrichtung wird das verunreinigte Materialgemisch (vorwiegend plastische Kunststoffmasse) gemäß Figur 1 an der Eintrittsöffnung 20 in Richtung des Pfeils 37 unter Druck in den Ringraum 22 und durch die feinen Durchgangsöffnungen 10 im Filterrohr 11 des rotierenden Filterkörpers 2 gepresst. Das gefilterte Material gelangt über das Filterrohr 11 und den Stützkörper 12 mit den Sammelrillen 13 und den Abströmbohrungen 14 über die Trägerwelle 6 zu der Austrittsöffnung 18 und kann dort in Pfeilrichtung 38 entnommen werden. Die am Filterrohr 11 zurückgehaltenen Rückstände werden durch den Abstreifer 23 bei der Drehung des Filterohres 11 abgehoben und unmittelbar an die rotierende Förderschnecke 24 weitergegeben ohne das Filter weiter zu berühren. Die Rückstände werden dann von der Förderschnecke 24 zu einem Ausgang transportiert und können dort in Pfeilrichtung 25 abgegeben werden.

Die Erfindung ist nicht auf das vorstehend beschriebene Ausführungsbeispiel beschränkt. So kann eine Filterung z.B. auch mit einer von innen nach außen gerichteten Strömungsrichtung erfolgen, wobei der Abstreifer dann an der Innenseite des hohlzylindrischen Filterkörpers angebracht ist. Das Filterelement kann außerdem stationär und der Abstreifer drehbar ausgeführt sein.

## Patentansprüche

1. Vorrichtung zum kontinuierlichen Filtern von Materialgemischen, insbesondere zur Abtrennung von Verunreinigungen aus Kunststoffschmelzen, mit einem innerhalb eines Gehäuses (1) angeordneten hohlzylindrischen Filterelement (2), einem von der Außenseite des Filterelements (2) und einer Innenwand des Gehäuse (1) begrenzten Ringraum (22) und mindestens einem mittels einer Anstelleinrichtung an den Filterkörper (2) anpressbaren Abstreifer (23) zur Entfernung der am Filterelement (2) zurückgehaltenen Verunreinigungen bei einer Relativbewegung von Filterelement (2) und Abstreifer (23), **dadurch gekennzeichnet, dass** die Anstelleinrichtung einen an einem Anschlussstutzen (19) des Gehäuses (1) angeordneten Druckaufnehmer (42, 53) und ein mit dem Druckaufnehmer (42, 53) verbundenes Stellglied (43) zur Einstellung des Anpressdrucks des Abstreifers (23) in Abhängigkeit von dem durch den Druckaufnehmer (42, 53) erfassten Druck enthält, wobei der Druckaufnehmer (42, 53) den Druck des Materialgemisches stromaufwärts des Filterkörpers (2) erfasst und Steuersignale für das Stellglied (43) liefert, das als hydraulischer Stellzylinder (32, 33, 48) mit einen innerhalb eines Zylindergehäuses (32) verschiebbaren Druckkolben (33) und einer mit dem Abstreifer (23) verbundenen Kolbenstange (48) ausgebildet ist und die von dem Druckaufnehmer (42, 53) gelieferten Steuersignale in einen Anpressdruck für den Abstreifer (23) umwandelt.

2. Vorrichtung nach Anspruch 1, **dadurch gekennzeichnet, dass** der Druckaufnehmer ein hydraulischer Geberzylinder (42) ist.

3. Vorrichtung nach Anspruch 2, **dadurch gekennzeichnet, dass** der hydraulische Geberzylinder (42) einen innerhalb eines Kolbengehäuses (44) verschiebbaren Druckkolben (45) und einen in einen Eintrittskanal (20) ragenden Druckbolzen (46) enthält.

4. Vorrichtung nach einem der Ansprüche 1 bis 3, **dadurch gekennzeichnet, dass** der Druckaufnehmer (42) und das Stellglied (43) über eine Hydraulikleitung (50) miteinander verbunden sind.

5. Vorrichtung nach Anspruch 1, **dadurch gekennzeichnet, dass** der Druckaufnehmer ein elektrischer Druckgeber (53) ist.

6. Vorrichtung nach Anspruch 5, **dadurch gekennzeichnet, dass** der elektrische Druckgeber (53) über eine Steuerelektronik (54) und ein Druckregelventil (55) mit dem Stellglied (43) verbunden ist.

7. Vorrichtung nach einem der Ansprüche 1 bis 6, **dadurch gekennzeichnet, dass** das Filterelement (2) innerhalb des Gehäuses (1) um eine Mittelachse (3) motorisch drehbar angeordnet ist.

8. Vorrichtung nach einem der Ansprüche 1 bis 7, **dadurch gekennzeichnet, dass** der Abstreifer (23) schräg zum Filterelement (2) angeordnet ist.

9. Vorrichtung nach einem der Ansprüche 1 bis 8, **dadurch gekennzeichnet, dass** der Abstreifer (23) mit einem Anstellwinkel (α) zu einer Mittelebene (40) des Filterelements (2) angeordnet ist.

10. Vorrichtung nach Anspruch 9, **dadurch gekennzeichnet, dass** der Anstellwinkel (α) des Abstreifers (23, 28, 30) veränderbar ist.

11. Vorrichtung nach einem der Ansprüche 1 bis 10, **dadurch gekennzeichnet, dass** in dem Gehäuse (1) eine in unmittelbarer Nähe des Abstreifers (23) vorgesehene Förderschnecke (24) zum Abtransport der durch den Abstreifer (23, 28, 30) vom Filterelement (2) radial entfernten Verunreinigungen angeordnet ist.

12. Vorrichtung nach Anspruch 11, **dadurch gekennzeichnet, dass** das motorisch drehangetriebene Filterelement (2) und die Förderschnecke (24) getrennt antreibbar sind.

13. Vorrichtung nach Anspruch 12, **dadurch gekennzeichnet, dass** die Drehzahl des Filterelements (2) und die Drehzahl der Förderschnecke (24) getrennt steuerbar sind.

## Claims

1. Device for continuous filtering of material mixtures, in particular for separating impurities from plastic melts, with a hollow cylindrical filter element (2) arranged inside a housing (1), an annular chamber (22) bounded by the outside of the filter element (2) and an inside wall of the housing (1), and at least one scraper (23) which can be pressed against the filter body (2) by means of a setting device for removing the impurities trapped on the filter element (2) during a relative movement of the filter element (2) and the scraper (23), **characterised in that** the setting device comprises a pressure pickup (42, 53) arranged on a connecting stub (19) of the housing (1), and a setting element (43) connected to the pressure pickup (42, 53) for setting the contact pressure of the scraper (23) depending on the pressure detected by the pressure pickup (42, 53), the pressure pickup (42, 53) detecting the pressure of the material mixture upstream of the filter body (2) and supplying control signals for the setting element (43) which is embodied as a hydraulic setting cylinder (32, 33, 48) with a pressure piston (33) which is displaceable inside a cylinder housing (32), and a piston rod (48) which is connected to the scraper (23), and converts the control signals supplied by the pressure pickup (42, 53) into a contact pressure for the scraper (23).

2. Device according to claim 1, **characterised in that** the pressure pickup is a hydraulic pickup cylinder (42).

3. Device according to claim 2, **characterised in that** the hydraulic pickup cylinder (42) comprises a pressure piston (45) which is displaceable inside a piston housing (44), and a pressure pin (46) extending into an inlet channel (20).

4. Device according one of claims 1 to 3, **characterised in that** the pressure pickup (42) and the setting element (43) are connected to one another by means of a hydraulic line (50).

5. Device according to claim 1, **characterised in that** the pressure pickup is an electric pressure sensor (53).

6. Device according to claim 5, **characterised in that** the electric pressure sensor (53) is connected to the setting element (43) by means of control electronics (54) and a pressure regulating valve (55).

7. Device according to one of claims 1 to 6, **characterised in that** the filter element (2) is arranged inside the housing (1) so as to be rotatable by motor about a central axis (3).

8. Device according to one of claims 1 to 7, **characterised in that** the scraper (23) is arranged at an oblique angle to the filter element (2).

9. Device according to one of claims 1 to 8, **characterised in that** the scraper (23) is arranged with an angle of attack (*α*) in relation to a central plane (40) of the filter element (2).

10. Device according to claim 9, **characterised in that** the angle of attack (*α*) of the scraper (23, 28, 30) can be changed.

11. Device according to one of claims 1 to 10, **characterised in that** in the housing (1) there is a screw conveyor (24) which is provided in the immediate vicinity of the scraper (23) to carry off the impurities removed radially from the filter element (2) by the scraper (23, 28, 30).

12. Device according to claim 11, **characterised in that** the filter element (2) driven in rotation by motor and the screw conveyor (24) can be driven separately.

13. Device according to claim 12, **characterised in that** the rotational speed of the filter element (2) and the rotational speed of the screw conveyor (24) can be controlled separately.

## Revendications

1. Dispositif de filtrage continu de mélanges de matériaux, particulièrement destiné à la séparation des impuretés de plastique en fusion, comprenant un élément filtrant (2) cylindrique creux disposé à l'intérieur d'un boîtier (1), un espace annulaire (22) délimité par le côté extérieur de l'élément filtrant (2) et une paroi interne du boîtier (1) et au moins un racloir (23) pouvant être appuyé au moyen d'un dispositif de réglage sur le corps filtrant (2) pour éloigner les impuretés retenues sur l'élément filtrant (2) dans un mouvement relatif de l'élément filtrant (2) et du racloir (23), **caractérisé en ce que** le dispositif de réglage comprend un capteur de pression (42, 53) disposé sur une tubulure de raccord (19) du boîtier (1) et un membre de réglage (43) relié au capteur de pression (42, 53) pour régler la pression d'application du racloir (23) en fonction de la pression détectée par le capteur de pression (42, 53), le capteur de pression (42, 53) détectant la pression du mélange de matériaux en aval du corps filtrant (2) et fournissant des signaux de commande pour le membre de réglage (43) qui est un cylindre de réglage hydraulique (32, 33, 48) avec un piston hydraulique (33) mobile à l'intérieur d'un boîtier de cylindre (32) et une tige de piston (48) reliée au racloir (23) et qui convertit les signaux de commande fournis par le capteur de pression (42, 53) en une pression d'application du racloir (23).

2. Dispositif selon la revendication 1, **caractérisé en ce que** le racloir est un maître-cylindre hydraulique (42).

3. Dispositif selon la revendication 2, **caractérisé en ce que** le maître-cylindre hydraulique (42) comprend un piston hydraulique (45) mobile à l'intérieur d'un boîtier de piston (44) et comporte un boulon de pression (46) faisant saillie dans un canal d'admission (20).

4. Dispositif selon l'une quelconque des revendications 1 à 3, **caractérisé en ce que** le capteur de pression (42) et le membre de réglage (43) sont reliés l'un à l'autre par une conduite hydraulique (50).

5. Dispositif selon la revendication 1, **caractérisé en ce que** le capteur de pression est un transmetteur de pression électrique (53).

6. Dispositif selon la revendication 5, **caractérisé en ce que** le transmetteur de pression électrique (53) est relié au membre de réglage (43) par une électronique de commande (54) et une soupape de régulation de la pression (55).

7. Dispositif selon l'une quelconque des revendications 1 à 6, **caractérisé en ce que** l'élément filtrant (2) est disposé à l'intérieur du boîtier (1) de manière à pouvoir tourner avec un moteur sur un axe médian (3).

8. Dispositif selon l'une quelconque des revendications 1 à 7, **caractérisé en ce que** le racloir (23) est disposé de manière oblique par rapport à l'élément filtrant (2).

9. Dispositif selon l'une quelconque des revendications 1 à 8, **caractérisé en ce que** le racloir (23) est disposé avec un angle d'incidence (α) par rapport à un plan médian (40) de l'élément filtrant (2).

10. Dispositif selon la revendication 9, **caractérisé en ce que** l'angle d'incidence (α) du racloir (23, 28, 30) est modifiable.

11. Dispositif selon l'une quelconque des revendications 1 à 10, **caractérisé en ce que** dans le boîtier (1) une hélice de transport (24) prévue dans le voisinage immédiat du racloir (23) est disposée pour l'évacuation des impuretés éloignées radialement de l'élément filtrant (2) par le racloir (23, 28, 30).

12. Dispositif selon la revendication 11, **caractérisé en ce que** l'élément filtrant (2) entraîné par rotation par moteur et l'hélice de transport (24) peuvent être entraînés séparément.

13. Dispositif selon la revendication 12, **caractérisé en ce que** le nombre de tours de l'élément filtrant (2) et le nombre de tours de l'hélice de transport (24) peuvent être commandés séparément.
